# EUROPÄISCHE PATENTSCHRIFT

(11) **EP 3 037 242 B1**
(45) Veröffentlichungstag und Bekanntmachung des Hinweises auf die Patenterteilung: **04.10.2017**
(21) Anmeldenummer: 15202544.1
(22) Anmeldetag: 23.12.2015
(51) Int. Cl.: B29C 49/12, B29C 49/78, B29C 49/18, B29C 49/06, B29C 49/64, B29L 31/00, B29K 105/00

(54) **VERFAHREN ZUM UMFORMEN VON KUNSTSTOFFVORFORMLINGEN**
METHOD FOR REFORMING PLASTIC PRE-FORMS
PROCÉDÉ DE TRANSFORMATION D'ÉBAUCHES EN PLASTIQUE

(30) Priorität: 23.12.2014 DE 102014119563
(43) Veröffentlichungstag der Anmeldung: 29.06.2016
(73) Patentinhaber: Krones AG, 93073 Neutraubling (DE)
(72) Erfinder: Knapp, Peter, 93073 Neutraubling (DE); Steiner, Andreas, 93073 Neutraubling (DE); Hirdina, Jochen, 93073 Neutraubling (DE); Fleischer, Klaus-Peter, 93073 Neutraubling (DE)
(74) Vertreter: Bittner, Bernhard

(56) Entgegenhaltungen:
- DE-A1- 10 116 665
- DE-A1-102008 038 782
- US-A1- 2011 206 882
- US-B1- 6 576 171

## Beschreibung

Die vorliegende Erfindung betrifft ein Verfahren zum Umformen von Kunststoffvorformlingen zu Kunststoffflaschen sowie eine Vorrichtung zum Umformen von Kunststoffvorformlingen zu Kunststoffflaschen gemäß den jeweiligen Oberbegriffen der Patentansprüche 1 und 10.

Ausgangspunkt ist hierbei ein Verfahren zum Umformen von Kunststoffvorformlingen zu Kunststoffflaschen, wobei die Kunststoffvorformlinge in Blasstationen eingebracht werden, wobei jede Blasstation mindestens eine Blasform sowie eine Reckstange zum Recken des Kunststoffvorformlings entlang einer Längsachse des Kunststoffvorformlings innerhalb der Blasform umfasst und durch Beaufschlagung mit einem gasförmigen Medium in der Blasform die Kunststoffvorformlinge zu den Kunststoffflaschen expandiert werden.

Derartige Verfahren sind dabei aus dem Stand der Technik bereits wohl bekannt und unter den üblichen Blasformprozessen zur Herstellung von Kunststoffflaschen subsummierbar.

Allerdings haben die Erfinder den Bedarf erkannt, dass an Kunststoffflaschen oftmals ganz besonders individuelle Materialanforderungen und/oder haptisch wahrnehmbare Anforderungen an die individuelle Ausformung der jeweiligen Kunststoffflaschen gestellt werden.

Dabei kommt es bei kundenseitigen Anforderungen oftmals nicht nur auf eine beispielsweise Größe oder Ausformung der jeweiligen Kunststoffflaschen an, sondern alternativ oder zusätzlich hierzu ist ebenso eine Wanddickenverteilung in einer Längsrichtung der jeweiligen Kunststoffflaschen entscheidend, um zum einen in besonders einfacher Art und Weise eine Stabilität der Kunststoffflasche insbesondere in deren befüllten Zustand zu gewährleisten und andererseits bei gleichzeitig mechanisch stabilen Eigenschaften das Gewicht der Kunststoffflasche einstellen zu können.

Eine Wanddickenverteilung in streckgeblasenen Behältern ist nach bisherigen Erkenntnissen aus dem Stand der Technik durch ein kompliziertes Zusammenspiel einer Vielzahl von prozesstechnischen Einflussgrößen, wie Vorblas-Timing, -druck und -durchfluss sowie den Heizeinstellungen in den unterschiedlichen Heizzonen während des Herstellungsprozesses einstellbar.

Beispielhaft ist in der von der Anmelderin stammenden Druckschrift DE 101 16 665 A1 ein Verfahren zur Steuerung eines Blasvorgangs bei der Herstellung von Behältern gezeigt, bei der eine Wandstärke eines Behälters unmittelbar nach dessen Herstellung erfasst und mit einer Sollgröße dieser mindestens einen erfassten Eigenschaft verglichen wird und ein zur Erwärmung der Vorformlinge erzeugtes Temperaturprofil und/oder mindestens ein Blasparameter in Abhängigkeit von der Größe des Vergleichsergebnisses in Richtung auf eine Verringerung dieser Größe verändert wird. "Wanddickenverteilung" bezeichnet daher den Verlauf einer Wanddicke der Kunststoffflaschen entlang der Längsrichtung der Kunststoffflasche.

Mit anderen Worten zeigt diese Druckschrift die Einstellung einer Wanddickenverteilung des Behältnisses erst nach der eigentlichen Herstellung des Behältnisses und ist zudem insbesondere mit dem Heizprozess verbunden. Während des Blasprozesses kann daher eine Einstellung der Wandstärke, d.h. die Einstellung einer Wanddickenverteilung gemäß dieser Druckschrift nicht erfolgen.

Demgegenüber zeigt zwar die Druckschrift EP 2 247 492 B1 ein Streckblasverfahren, bei dem während des Blasvorgangs innerhalb der Blasform eine Wanddickenverteilung überwacht werden kann, jedoch gibt diese Druckschrift dem Fachmann lediglich an die Hand, dass eine Wanddickenverteilung mittels einer Vielzahl von unterschiedlichen Regelparametern, wie beispielsweise der Vorformlingstemperatur, der Temperaturverteilung im Vorformling, dem Blasdruckverlauf, Reckverlauf, Materialeigenschaften, etc. eingestellt werden kann, wobei diese Druckschrift ebenso wenig eine Möglichkeit aufzeigt, einzelne Blasstationen individuell im Hinblick auf die Wanddickenverteilung einzelner gefertigter Flaschen Einfluss zu nehmen.

Die Erfinder haben nun erkannt, dass eine Regelung der Vielzahl an komplexen Wechselwirkungen zwischen den einzelnen Regelgrößen sehr störanfällig während des Blasvorgangs ist und zudem eine technisch komplexe und kostenintensive Blasvorrichtung benötigt.

Es ist daher eine Aufgabe der vorliegenden Erfindung, die oben genannten Nachteile zu überwinden und somit ein Verfahren zum Umformen von Kunststoffvorformlingen zu Kunststoffflaschen anzugeben, bei dem während des Blasvorgangs eine Wanddickenverteilung der Kunststoffvorformlinge bzw. der Kunststoffflaschen besonders einfach und individuell eingestellt werden kann und dabei gleichzeitig ein Minimum an Regelgrößen benutzt wird, um ein Verfahren anzubieten, welches besonders einfach zur Durchführung der Herstellung mechanisch stabiler und kostengünstiger Behältnisse dient.

Diese Aufgabe wird durch den Gegenstand des Patentanspruches 1 gelöst.

Um nun ein solches Verfahren anzugeben, macht die vorliegende Erfindung unter anderem von der Idee Gebrauch, dass mittels zumindest einer Messeinrichtung, beispielsweise während des Blasvorgangs, eine Wanddicke des Kunststoffbehälters gemessen wird und die Messeinrichtung die Messwerte an eine Regelungs- und/oder Steuerungseinrichtung ausgibt, wobei durch die Regelungs- und/oder Steuerungseinrichtung zumindest eine Reckgeschwindigkeit der Reckstange während des Blasvorganges zur Einstellung einer Wanddicke der Kunststoffflaschen zumindest zeitweise und/oder zumindest stellenweise individuell für jede Blasstation variiert wird.

Insbesondere kann es sich daher bei dem hier vorgeschlagenen Verfahren um ein solches handeln, welches einen geschlossenen Regelkreis umfasst, innerhalb dessen die Messeinrichtung und die Regelungs- und/oder Steuerungseinrichtung ein fest integrierter Bestandteil sind.

Dabei kann die Messeinrichtung beispielsweise zeitlich kontinuierlich Wanddicken bzw. Wanddickenverteilungen entlang der Längsrichtung der Kunststoffvorformlinge messen und diese Messwerte entweder in Form von Datenpaketen zeitlich diskontinuierlich oder aber zeitlich kontinuierlich, also in Form von einzelnen Daten, an die Regelungs- und/oder Steuerungseinrichtung ausgeben.

Da im Unterschied zum zitierten Stand der Technik die Regelungs- und/oder Steuerungseinrichtung anstatt einer Vielzahl von unterschiedlichen Regelgrößen die hier beschriebene Reckgeschwindigkeit der Reckstange als Regelgröße nutzt, kann daher auch der geschlossene Regelkreis besonders einfach und langlebig ausgestaltet werden. Es kann nämlich vorteilhaft auf die Abstimmung einzelner Subregelkreise, welche miteinander selbstverständlich nach dem bisherigen Stand der Technik miteinander in Kommunikationsverbindung stehen, verzichtet werden. Insbesondere kann daher die Reckgeschwindigkeit als einzige Regelgröße genutzt werden bzw. das hier beschriebene Verfahren mittels eines einzigen geschlossenen Regelkreises, innerhalb dessen die Messeinrichtung und die Regelungs- und/oder Steuerungseinrichtung implementiert sind, auskommen.

Die Messung der Wanddickenverteilung erfolgt bevorzugt nach dem Blasvorgang und besonders bevorzugt entlang des gesamten Längsprofils der fertig geblasenen Flasche. Insbesondere ist denkbar, dass eine Wanddickenverteilung, vorzugsweise nur, während einer Vorblasphase eingestellt wird und/oder einstellbar ist. Zur Messung der Wanddickenverteilung wäre jedoch auch denkbar, die Messeinrichtung bzw. Messsensoren entweder bereits innerhalb der Blasform und/oder an der Reckstange anzuordnen, so dass diese Dickensensoren die jeweilige Wanddicke des Vorformlings in Abhängigkeit der jeweiligen Position der Messsensoren entlang der Längsrichtung der Kunststoffvorformlinge ermitteln können.

Eine Regelung kann dann insbesondere dadurch realisiert sein, als dass die gemessenen Wanddicken von der Messeinrichtung an die Regelungs- und/oder Steuerungseinrichtung weitergegeben werden und von der Regelungs- und/oder Steuerungseinrichtung diese so gemessenen Wanddickenmesswerte mit in der Regelungs- und/oder Steuerungseinrichtung hinterlegten Sollwerten verglichen werden und basierend auf einer eventuellen Abweichung zwischen den Sollwerten und den Ist-Werten die den Blasformungsvorgang beeinflussende Parameter, also auch die Reckgeschwindigkeit der Reckstange verändert wird, derart, dass eine eventuell verbleibende Abweichung minimiert wird. Ein derartiger Regelkreis kann daher in Form eines Online-Regelkreises implementiert sein.

Ein Online-Regelkreis umfasst daher zumindest eine Online-Messung eines Flaschenqualitätskriteriums (zum Beispiel einer Wanddickenverteilung) während des Produktionsprozesses (d.h. während der Durchlaufphase der Linie), ohne die Flasche der Abfülllinie (dem Verarbeitungsprozess: Fertigen, Füllen, ..., Palletieren) zu entnehmen oder für längere Zeit zu entnehmen.

Es wurde nämlich erkannt, dass - falls das Recken während des Ablaufs verzögert wird - sich eine Materialansammlung an der zugehörigen Höhenposition des Kunststoffvorformlings ergibt, an der sich die Blase simultan ausbildet. Würde man den Reckverlauf stattdessen beschleunigen, ergäbe sich an zugehöriger Stelle eine entsprechend dünnere Stelle. Dieser Effekt lässt sich erfindungsgemäß nutzen, um die Wanddickenverteilung insbesondere während der Vorblasphase zu beeinflussen. Mit der beschriebenen Messung mittels der hier beschriebenen Messeinrichtung kann dieser Effekt genutzt werden, um so den obig beschriebenen geschlossenen Regelkreis zur Einregelung der Wanddicken mit nur einer Stellgröße zu erzeugen. Dieses Erzeugen der Wanddicke mit nur einer Regelgröße, d.h. der Reckstangengeschwindigkeit, kann daher insbesondere besonders einfach während des Vorblasens und/oder während des Zwischenblasens durchgeführt werden.

Gemäß zumindest einer Ausführungsform werden in das hiermit beanspruchte Verfahren zum Umformen von Kunststoffvorformlingen zu Kunststoffflaschen zunächst Kunststoffvorformlinge in Blasstationen eingebracht, wobei jede Blasstation mindestens eine Blasform sowie eine Reckstange zum Recken des Kunststoffvorformlings entlang einer Längsachse des Kunststoffvorformlings innerhalb der Blasform umfasst und durch Beaufschlagung mit einem gasförmigen Medium in der Blasform die Kunststoffvorformlinge zu den Kunststoffflaschen expandiert werden.

Erfindungsgemäß wird mittels zumindest einer Messeinrichtung eine Wanddicke des Kunststoffbehälters gemessen, wobei die Messeinrichtung die Messwerte an eine Regelungs- und/oder Steuerungseinrichtung ausgibt, wobei durch die Regelungs- und/oder Steuerungseinrichtung zumindest eine Reckgeschwindigkeit der Reckstange während des Blasvorganges zur Einstellung eines Wanddicke der Kunststoffflaschen zumindest zeitweise und/oder zumindest stellenweise individuell für jede Blasstation variiert wird.

Gemäß zumindest einer Ausführungsform ist die Reckgeschwindigkeit die einzige Regelgröße, mittels der über die Regelungs- und/oder Steuerungseinrichtung die Wandstärke der Kunststoffflaschen, insbesondere während des Blasvorganges, eingestellt wird. Die Erfinder haben nämlich überraschenderweise erkannt, dass es absolut ausreichend ist, ausschließlich die Reckgeschwindigkeit als eine Regelgröße zu implementieren, wohingegen nach der Lehre des Stands der Technik eine Wanddickenverteilung von streckgeblasenen Behältern nur durch eine Vielzahl von prozesstechnischen Einflussgrößen, wie Vorblas-Timing, -druck und -durchfluss sowie den Heizstellungen in den unterschiedlichen Heizzonen beeinflusst wird. Tatsächlich konnten die Erfinder jedoch feststellen, dass die Reckgeschwindigkeit als einzige Regelgröße vollkommen ausreichend ist, um eine Wanddickenverteilung besonders individuell für jede Blasstation anpassen und einstellen zu können.

Gemäß zumindest einer Ausführungsform umfasst der Blasvorgang einen ersten Schritt, während dessen ein Vorblasen durch Beaufschlagung der Kunststoffvorformlinge mit einem ersten Druck durchgeführt wird, einen zweiten Schritt, während dessen ein Zwischenblasen der Kunststoffvorformlinge mit einem zweiten Druck, der höher ist als der erste Druck, durchgeführt wird und schließlich einen dritten Schritt, der durch ein Fertigblasen der Kunststoffvorformlinge mit einem dritten Druck, der höher ist als die ersten beiden Drücke, gekennzeichnet ist. Dabei wird wenigstens während des Vorblasens und/oder während des Zwischenblasens die Reckgeschwindigkeit der Reckstange variiert. Beispielsweise wird wenigstens während des Vorblasens und/oder während des Zwischenblasens die Reckgeschwindigkeit der Reckstange und/oder zu einem Zeitpunkt p0 die Reckgeschwindigkeit der Reckstange variiert

Es wurde erkannt, dass die einzelnen Druckniveaus während der verschiedenen Blasphasen ebenso ein entscheidendes Kriterium für die Ausbildung einer vorgebbaren Wanddickenverteilung sind. Insbesondere ist nämlich denkbar, dass mittels der hier beschriebenen Regelungs- und/oder Steuerungseinrichtung neben der Einstellung der Reckgeschwindigkeit der Reckstange zudem auch die einzelnen Drücke während der einzelnen Blasphasen geregelt werden können. Vorzugsweise handelt es sich bei einer derartigen Regelung dann um eine automatische Regelung, so dass sich die einzelnen Drücke praktisch einschwingen können. Denkbar ist nämlich auch, dass die einzelnen Drücke von der jeweiligen Reckgeschwindigkeit abhängig gemacht sind oder umgekehrt die Reckgeschwindigkeit von einzelnen Drücken abhängig realisiert ist.

Bevorzugt wird das Druckniveau nach dem Fertigblasen zumindest teilweise wieder auf einen Zwischenblasdruck abgesenkt. Vorteilhaft liegt der Vorblasdruck zwischen wenigstens 2 bar und höchstens 15 bar, bevorzugt zwischen wenigstens 4 bar und höchstens 12 bar und besonders bevorzugt zwischen wenigstens 4 bar und höchstens 10 bar. Vorteilhaft liegt der Zwischenblasdruck zwischen wenigstens 8 bar und höchstens 40 bar, bevorzugt zwischen wenigstens 12 bar und höchstens 20 bar. Vorteilhaft liegt der Fertigblasdruck zwischen wenigstens 22 bar und höchstens 40 bar und bevorzugt zwischen wenigstens 20 bar und höchstens 35 bar.

Gemäß zumindest einer Ausführungsform wird zumindest während des Vorblasens und/oder während des Zwischenblasens die Reckgeschwindigkeit derart variiert, dass abgesehen von Geschwindigkeitsumschaltzeitintervallen die Reckgeschwindigkeit jeweils konstant ist.

Unter "Geschwindigkeitsumschaltzeitintervallen" werden diejenigen Zeitintervalle während des Blasvorgangs verstanden, während derer mittels einer Antriebseinrichtung zwischen den einzelnen Verfahrgeschwindigkeiten der Reckstange umgeschaltet wird.

Die Umschaltzeitpunkte können jedoch auch so gewählt sein, dass die Reckgeschwindigkeit stets beschleunigt und/oder verzögert wird und demzufolge niemals konstant ist. Ein Geschwindigkeitsumschaltzeitintervall würde demnach, vorzugsweise direkt und/oder verzögerungsfrei, auf das nächste folgen.

Gemäß zumindest einer Ausführungsform steht während des Fertigblasens die Reckstange innerhalb der Blasform still oder wird zumindest in seiner Geschwindigkeit verlangsamt. Bei Stillstand der Reckstange während des Fertigblasens wird eine Wanddickenverteilung statt über eine Bewegung der Reckstange über andere Regelgrößen, insbesondere über den Blasdruck und/oder die Blastemperatur selbst eingeregelt.

Gemäß zumindest einer Ausführungsform wird zum Zeitpunkt p0 die Reckgeschwindigkeit der Reckstange verzögert. Das kann insbesondere heißen, dass kurz vor dem Zeitpunkt des Anschlags der Reckstange an den Preformboden, d.h. zum Zeitpunkt p0, die Geschwindigkeit kontinuierlich oder plötzlich verlangsamt wird. Durch die Verzögerung der Reckgeschwindigkeit wird der Zeitpunkt des Kontakts variiert und damit die jeweilige Position der Preformkuppe beim Berühren mit der Reckstange. Durch die entstehenden Fliehkräfte beim Transfer erfährt der Preform eine gewisse Pendelbewegung innerhalb der Blasform, insbesondere bevor die Reckstange den p0-Punkt erreicht. Diese Pendelbewegung verursacht gegebenenfalls eine falsche Positionierung des Anspritzpunkts, einen sogenannten Offcenter. Diese Problematik lässt sich verringern, indem die Reckgeschwindigkeit zum Zeitpunkt p0 verzögert wird. Die Reckstange pendelt dann zwar immer noch, sie stößt jedoch seitlich schon früher an den Preform an und wird dadurch in ihrer Bewegung "eingefangen".

Gemäß zumindest einer Ausführungsform ändert sich während den Geschwindigkeitsumschaltzeitintervallen die Reckgeschwindigkeit linear in Abhängigkeit von der Blaszeit. Dazu kann das Verfahren mittels einer derartigen Antriebseinrichtung betrieben werden, welche es ermöglicht, dass die jeweilige Verfahrgeschwindigkeit nicht unkontrollierbar während des Umschaltens hin und her variiert, sondern vielmehr vorgebbar entlang eines linearen Verlaufs gesteigert, erhöht oder verringert wird.

Gemäß zumindest einer Ausführungsform umfasst jede Blasstation zumindest eine Antriebseinheit, insbesondere einen Servomotor, welcher durch die Regelungs- und/oder Steuerungseinrichtung individuell derart angesteuert wird, dass die Reckgeschwindigkeit der Reckstange variiert wird. Insbesondere kann es sich bei dem hier beschriebenen Servomotor um einen Motor in Form eines Linearmotors handeln. Es wurde erkannt, dass ein Linearmotor besonders einfach mittels der Regelungs- und/oder Steuerungseinrichtung fahrbar ist.

Gemäß zumindest einer Ausführungsform wird das Fertigblasen der Kunststoffflaschen zeitgesteuert eingeleitet, d.h. kurz vor Erreichen des maximalen Zwischenblasdruckes wird auf den Fertigblasdruck umgeschaltet. Dies gewährleistet, dass das Fertigblasen erst dann eingeleitet wird, wenn während des Zwischenblasens die Wanddickenverteilung insbesondere zum Ende des Zwischenblasdruckzeitintervalls in hinreichender Art und Weise eingestellt ist. Es wäre auch denkbar, erst dann auf den Fertigblasdruck umzuschalten, wenn der Zwischenblasdruck einen vorgebbaren Grenzwert überschreitet.

Gemäß zumindest einer Ausführungsform werden die Blasformen während der Expansion der Kunststoffvorformlinge entlang eines vorgegebenen Transportpfades transportiert, wobei die Reckgeschwindigkeit auch in Abhängigkeit von einer Position der Blasform entlang dieses Transportpfades gewählt wird.

So ist es beispielsweise möglich, dass ab einer bestimmten Position der Blasstationen auf ihrem Transportpfad in jedem Fall eine Umschaltung von dem Vorblasdruck zu dem Zwischenblasdruck oder von dem Zwischenblasdruck zu dem Fertigblasdruck oder umgekehrt erfolgt.

Vorteilhaft werden die Blasformen bzw. die Blasstationen, deren Bestandteile bevorzugt auch die Blasformen sind, entlang eines kreisförmigen Transportpfades transportiert, beispielsweise mittels eines Blasrades. In diesem Fall befindet bevorzugt eine Überprüfung der jeweiligen Winkel statt, bei denen die betreffenden Verfahrensschritte eingeleitet werden.

So ist es beispielsweise möglich, dass die Zeitspanne bzw. der Winkel, während dessen eine Variation der Reckgeschwindigkeit der Reckstange stattfindet, nicht weiter vergrößert wird, wenn bereits eine vorgebbare Wanddickenverteilung erreicht ist.

Des Weiteren betrifft die vorliegende Erfindung eine Vorrichtung zum Umformen von Kunststoffvorformlingen zu Kunststoffflaschen. Insbesondere kann mittels der hier beschriebenen Vorrichtung ein Verfahren gemäß zumindest einer der obig ausgeführten Ausführungsformen durchgeführt werden, d.h. alle für das hier beschriebene Verfahren offenbarten Merkmale sind auch für die auch hier beschriebene Vorrichtung offenbart und umgekehrt.

Gemäß zumindest einer Ausführungsform umfasst die Vorrichtung zum Umformen von Kunststoffvorformlingen zu Kunststoffflaschen zumindest zwei Blasstationen, wobei die Kunststoffvorformlinge in Blasstationen einbringbar sind, wobei jede Blasstation mindestens eine Blasform sowie eine Reckstange zum Recken des Kunststoffvorformlings entlang einer Längsachse des Kunststoffvorformlings entlang einer Längsachse des Kunststoffvorformlings innerhalb der Blasform umfasst und durch Beaufschlagung mit einem gasförmigen Medium der Blasform die Kunststoffvorformlinge zu den Kunststoffflaschen expandierbar sind.

Erfindungsgemäß ist eine Wanddicke des Kunststoffbehälters mittels zumindest einer Messeinrichtung, beispielsweise während des Blasvorgangs, messbar, wobei die Messeinrichtung die Messwerte an eine Regelungs- und/oder Steuerungseinrichtung ausgibt und wobei durch die Regelungs- und/oder Steuerungseinrichtung zumindest eine Reckgeschwindigkeit der Reckstange während des Blasvorgangs zur Einstellung einer Wanddicke der Kunststoffflaschen zumindest teilweise und/oder zumindest stellenweise individuell für jede Blasstation variiert wird.

Dabei weist die hier beschriebene Vorrichtung die gleichen vorteilhaften Ausführungsformen und Vorteile auf, wie das hier beschriebene Verfahren auf.

Im Folgenden werden das hier beschriebene Verfahren sowie die hier beschrieben Vorrichtung anhand eines Ausführungsbeispiels sowie den dazugehörigen Figuren näher erläutert.

Die Figur 1 zeigt eine graphische Darstellung, bei der ein Reckweg einer Reckstange während des Ausblasens in Abhängigkeit einer Blaszeit sowie eine Reckgeschwindigkeit der Reckstange wiederum in Abhängigkeit der Blaszeit graphisch in einem Diagramm aufgetragen sind.

Die Figur 2 zeigt ein Ausführungsbeispiel eines Ausblasprozesses zur Ausformung von Behältnissen mittels einer Reckstange.

Die Figur 3 zeigt in einer weiteren graphischen Darstellung einen Reckweg in Abhängigkeit der Zeit für verschiedene Reckgeschwindigkeiten und Blasdrücke.

Die Figur 4 zeigt ein Ausführungsbeispiel einer hier beschriebenen Vorrichtung zum Umformen von Kunststoffvorformlingen zu Kunststoffflaschen entsprechend einer schematischen Draufsicht.

In den Ausführungsbeispielen und in den Figuren sind gleiche oder gleichwirkende Bestandteile jeweils mit den gleichen Bezugszeichen versehen. Die dargestellten Elemente sind nicht als maßstabsgerecht anzusehen, vielmehr können einzelne Elemente zum besseren Verständnis übertrieben groß dargestellt sein.

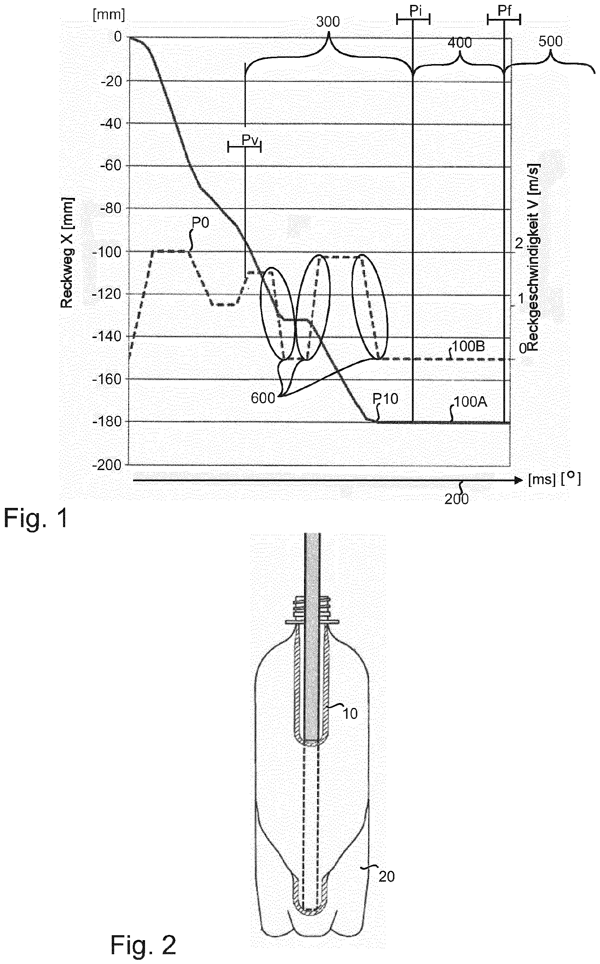

In der Figur 1 ist ein schematisches Diagramm dargestellt, bei dem ein Reckweg X gegen eine Blaszeit 200 in einem kartesischen Koordinatensystem aufgetragen wird. Mit anderen Worten bildet der Reckweg X die vertikale Ordinatenachse und die Blaszeit 200 eine Abszissenachse. Alternativ zur gegen die Abzissenachse aufgetragenen Blaszeit 200 kann auch ein Transportwinkel eines Kunststoffvorformlings herangezogen werden.

Auf einer dem Reckweg X gegenüberliegenden weiteren Ordinatenachse ist eine Reckgeschwindigkeit V wiederum gegen die Blaszeit 200 aufgetragen.

Insofern ist in dem Diagramm gemäß der Figur 1 eine erste Kurve 100A dargestellt, welche dem Verlauf des Reckwegs in Abhängigkeit der Blaszeit entspricht und eine zweite Kurve 100B, welche einem zeitlichen Verlauf der Reckgeschwindigkeit V einer Reckstange 22, welche einen Kunststoffvorformling 10 innerhalb einer Blasform 21 ausstreckt, entspricht.

Wie in Figur 2 gezeigt, wird zunächst ein Kunststoffvorformling 10 mittels der Reckstange 22 in Längsrichtung L der Kunststoffvorformlinge 10 bis zu einer Endlänge gestreckt. Dabei entspricht Figur 2 und der dort dargestellte Reckweg dem entsprechenden Reckweg der Figur 1.

Des Weiteren sind in dem Diagramm der Figur 1 die einzelnen Zeitpunkte pv, pi und pf graphisch eingezeichnet, wobei die einzelnen Zeitpunkte im Rahmen von Intervallangaben eingezeichnet sind innerhalb derer eine Druckumschaltung gewählt werden kann. Die Zeitpunkte und/oder Zeitintervalle pv, pi und pf sollen daher angeben, in welchem zeitlichen Rahmen die einzelnen Drücke zugeschaltet werden können. Für gewöhnlich handelt es sich bei dem zeitlichen Intervall, innerhalb dessen einzelne Drücke aufgeschaltet werden können, um ein solches von weniger als 2 Sekunden. Dabei bezeichnet der Zeitpunkt p0 denjenigen Zeitpunkt an welchem die Reckstange 22 an einem Preformboden anschlägt.

Pv steht daher für ein Zeitintervall zu dem die Vorblasphase 300 eingeleitet wird oder ist, wobei entsprechend pi für ein Zeitintervall steht, zu dem die Zwischenblasphase 400 eingeleitet wird oder ist, und pf steht für ein Zeitintervall für die Einleitung der Fertigblasphase 500 steht. Es kann jedoch alternativ hierzu auch sein, dass die einzelnen Zeitpunkte nicht nur den konkreten Zeitpunkt des Beginns der einzelnen Blasphasen bezeichnen, sondern die Zeitintervalle für die absolute Zeitdauer der entsprechenden Blasphase stehen. Zudem ist weiterhin ein Zeitpunkt p10 dargestellt, welcher erreicht wird, wenn die Reckstange 22 den Boden der Kunststoffflasche 20 in die gewünschte Endlage bringt und die Reckstange 22 daher maximal ausgefahren ist.

Mit anderen Worten ist daher aus dem Diagramm der Figur 1 eine Vorblasphase 300 sowie eine sich unmittelbar an die Vorblasphase 300 anschließende Zwischenblasphase 400 und eine sich unmittelbar an die Zwischenblasphase 400 anschließende Fertigblasphase 500 dargestellt. Erkennbar ist zudem, dass der Blasvorgang und der Reckvorgang zeitlich aufeinander abgestimmt sind. Der zeitliche Verlauf des Reckwegs X wird insbesondere in der Vorblasphase 300, also zwischen den Zeitpunkten p0 und p10 stark variiert.

Zudem ist erkennbar, dass beispielhaft während der Zwischenblasphase 400 die Reckgeschwindigkeit in ihrer Position verbleibt, so dass eine Reckgeschwindigkeit V bei Null liegt. Die Reckgeschwindigkei Vt muss in diesem Bereich jedoch nicht zwingend bei Null liegen, sondern kann auch nur eine Verzögerung oder gar eine Beschleunigung erfahren. Genauso gut könnte dies während der Fertigblasphase 500 geschehen.

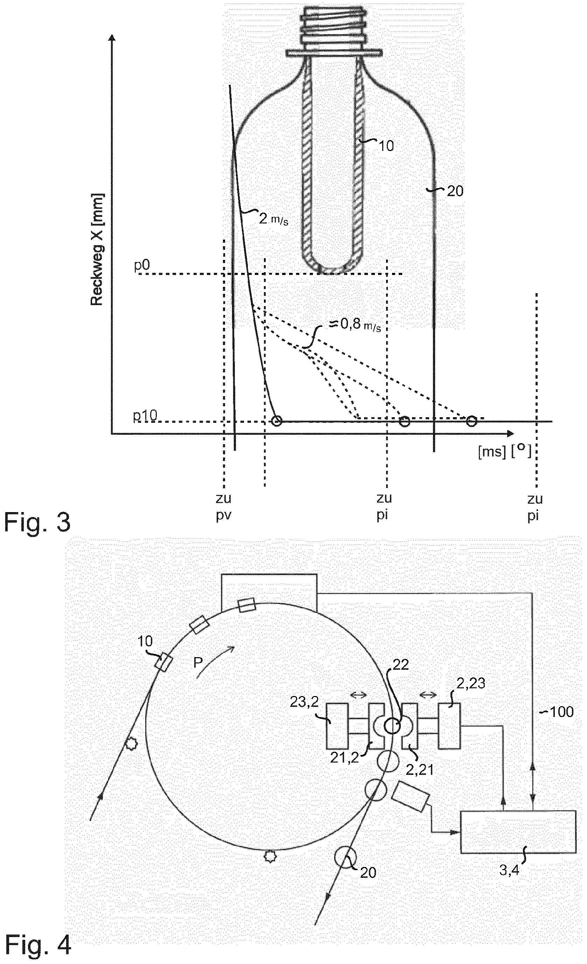

Die Figur 3 zeigt im Unterschied zu der Figur 1 zwar wiederum ein schematisches Diagramm eines Reckweges X, welcher gegen eine Blaszeit 200 aufgetragen ist, jedoch ist der Reckweg X für verschiedene Reckstangengeschwindigkeiten V der Reckstange 22 graphisch dargestellt. Insofern ist in der Figur 2 auf eine zweite Ordinatenachse, welche eigentlich in der Figur 1 zur Bezeichnung der Reckstangengeschwindigkeit V vorgesehen war, verzichtet und stattdessen ist graphisch den einzelnen Reckwegen X und insbesondere den einzelnen Reckwegabschnitten die jeweilig dazu entsprechende Reckgeschwindigkeit V zugeordnet.

In der Figur 4 ist eine Vorrichtung 100 zum Umformen der Kunststoffvorformlinge zu Kunststoffflaschen 20 gezeigt. Insbesondere sind die in den Figuren 1 und 2 dargestellten Verfahrensabläufe mittels der hier beschriebenen Vorrichtung 100 erreichbar. Dabei ist erkennbar, dass die Vorrichtung 100 mehrere Blasstationen 2 umfasst, wobei die Kunststoffvorformlinge 10 innerhalb jeder der Blasstationen 2 eingebracht sind. Dabei ist wiederum erkennbar, dass jede Blasstation 2 mindestens eine Blasform 21 sowie eine Reckstange 22 zum Recken des Kunststoffvorformlings 10 umfasst. Erfindungsgemäß weist die Vorrichtung 100 zur Einstellung der Reckgeschwindigkeit V einen in sich geschlossenen Regelkreis auf, welcher eine Messeinrichtung 4 umfasst, wobei die Messeinrichtung 4 eine Wanddicke des Kunststoffbehälters 10 misst und diese Messwerte an eine Regelungs- und/oder Steuerungseinrichtung 3 ausgibt. Diese Regelungs- und/oder Steuerungseinrichtung 3 regelt daher die Reckgeschwindigkeit V der Reckstange 22 während des Blasvorganges zur Einstellung der Wanddicke der Kunststoffflaschen zumindest teilweise und/oder zumindest stellenweise individuell für jede Blasstation 2, so dass die jeweilige Reckgeschwindigkeit der Reckstange 22 variiert werden kann.

Des Weiteren ist erkennbar, dass in einer ersten Phase, die noch vor der Vorblasphase 300 liegen kann, die Reckstange 22 mit einer Geschwindigkeit von wenigstens 1,5 m/s und höchstens 2,5 m/s, beispielsweise mit 2 m/s, in den Kunststoffvorformling 10 hineingefahren wird, im Wesentlichen bis die Reckstange 22 den Preformboden erreicht. Dieser Zeitraum kann wenigstens 5ms und höchstens 15 ms, beispielsweise 10 ms, andauern.

Darauf folgend kann während einer weiteren Blasphase die Reckstange 22 stillstehen. Dies kann während eines Zeitraums von wenigstens 30 ms und höchstens 70 ms, beispielsweise für 50 ms, geschehen. Die Reckstange 22 muss jedoch nicht zwingend stillstehen, sondern kann auch verzögert oder beschleunigt werden.

Während einer darauffolgenden Blasphase kann dann die Reckstange 22 wieder mit einer vorbestimmten Geschwindigkeit von beispielsweise wenigstens 1 m/s und höchstens 3 m/s, beispielsweise mit 1,8 m/s, angefahren und damit bewegt werden. Dies kann während eines Zeitraums von wenigstens 40ms und höchstens 80ms, beispielsweise für 60 ms, geschehen. Insbesondere können sich diese Blasphasen in den einzelnen Zeitabschnitten der Figur 1 wiederspiegeln.

Insofern ist in besonders einfacher Art und Weise eine Vorrichtung 100 sowie ein Verfahren zur Herstellung von Kunststoffflaschen bereitgestellt, bei dem insbesondere mittels einer einzigen Regelungsgröße, d.h. mittels der Reckgeschwindigkeit V der Reckstange 22, eine Wandstärkendickenverteilung des Kunststoffvorformlings bzw. der Kunststoffflasche 20 besonders individuell und kostengünstig eingestellt werden kann, ohne dass in zwingender Art und Weise weitere Stellgrößen zur Einstellung einer derartigen Wandstärkendickenverteilung nötig wären.

### Bezugszeichenliste

- L: Längsrichtung
- P: Transportpfad
- p0: Zeitpunkt bei Anschlagen der Reckstange 22 am Innenboden des Kunststoffvorformlings
- p10: Zeitpunkt beim Erreichen der Reckstange 22 des Flascheninnenbodens der Kunststoffflasche 20
- pv, pi, pf: Zeitpunkte der Vorblasphase, Zwischenblasphase und Fertigblasphase
- V: Reckgeschwindigkeit
- X: Reckweg
- 2: Blasstation
- 3: Regelungs- und/oder Steuerungseinrichtung
- 4: Messeinrichtung
- 10: Kunststoffvorformling
- 20: Kunststoffflasche
- 21: Blasform
- 22: Reckstange
- 100: Vorrichtung
- 100A: erste Kurve
- 100B: zweite Kurve
- 200: Blaszeit
- 300: Vorblasphase
- 400: Zwischenblasphase
- 500: Fertigblasphase
- 600: Geschwindigkeitsumschaltzeitintervalle

## Patentansprüche

1. Verfahren zum Umformen von Kunststoffvorformlingen (10) zu Kunststoffflaschen (20), wobei die Kunststoffvorformlinge in Blasstationen (2) eingebracht werden, wobei jede Blasstation mindestens eine Blasform (21) sowie eine Reckstange (22), zum Recken des Kunststoffvorformlings (10) entlang einer Längsachse des Kunststoffvorformlings (10) innerhalb der Blasform (21), umfasst, und durch Beaufschlagung mit einem gasförmigen Medium in der Blasform (21) die Kunststoffvorformlinge (10) zu den Kunststoffflaschen (20) expandiert werden,
**dadurch gekennzeichnet, dass**
mittels zumindest einer Messeinrichtung (4), beispielsweise während des Blasvorgangs, eine Wanddicke des Kunststoffbehälters gemessen wird, und die Messeinrichtung (4) die Messwerte an eine Regelungs- und/oder Steuerungseinrichtung (3) ausgibt, wobei durch die Regelungs- und/oder Steuerungseinrichtung (3) zumindest eine Reckgeschwindigkeit der Reckstange (22) während des Blasvorgangs zur Einstellung einer Wanddicke der Kunststoffflaschen (20) zumindest zeitweise und/oder zumindest stellenweise individuell für jede Blasstation (2) variiert wird.

2. Verfahren nach Anspruch 1,
**dadurch gekennzeichnet, dass**
die Reckgeschwindigkeit die einzige Regelgröße ist, mittels der über die Regelungs- und/oder Steuerungseinrichtung (3) die Wandstärke der Kunststoffflaschen, insbesondere während des Blasvorgangs, eingestellt wird.

3. Verfahren nach Anspruch 1 oder 2,
wobei
der Blasvorgang die folgenden Schritte umfasst:
- Vorblasen durch Beaufschlagen der Kunststoffvorformlinge (10) mit einem ersten Druck
- Zwischenblasen der Kunststoffvorformlinge (10) mit einem zweiten Druck, der höher ist als der erste Druck
- Fertigblasen der Kunststoffvorformlinge (10) mit einem dritten Druck, der höher ist als die ersten beiden Drücke
**dadurch gekennzeichnet, dass**
wenigstens während des Vorblasens und/oder während des Zwischenblasens die Reckgeschwindigkeit der Reckstange (22) variiert wird und/oder zu einem Zeitpunkt (p0) die Reckgeschwindigkeit der Reckstange (22) variiert wird.

4. Verfahren nach Anspruch 3,
**dadurch gekennzeichnet, dass**
zum Zeitpunkt (p0) die Reckgeschwindigkeit der Reckstange (22) verzögert wird.

5. Verfahren nach zumindest einem der Ansprüche 3 bis 4,
**dadurch gekennzeichnet, dass**
zumindest während des Vorblasens und/oder während des Zwischenblasens die Reckgeschwindigkeit derart variiert wird, dass während der Geschwindigkeitsumschaltzeitintervalle die Reckgeschwindigkeit verzögert oder beschleunigt wird.

6. Verfahren nach zumindest einem der vorhergehenden Ansprüche,
**dadurch gekennzeichnet, dass**
während des Fertigblasens die Reckstange (22) innerhalb der Blasform (21) stillsteht oder zumindest in ihrer Geschwindigkeit verlangsamt wird.

7. Verfahren nach Anpruch 5,
**dadurch gekennzeichnet, dass**
während der Geschwindigkeitsumschaltzeitintervalle sich die Reckgeschwindigkeit linear in Abhängigkeit der Blaszeit ändert.

8. Verfahren nach wenigstens einem der vorhergehenden Ansprüche,
**dadurch gekennzeichnet, dass**
jede Blasstation (2) zumindest eine Antriebseinheit (23), insbesondere einen Servomotor, umfasst, welcher durch die Regelungs- und/oder Steuerungseinrichtung (3) individuell derart angesteuert wird, dass die Reckgeschwindigkeit der Reckstange (22) variiert wird.

9. Verfahren nach wenigstens einem der vorhergehenden Ansprüche,
**dadurch gekennzeichnet, dass**
das Fertigblasen der Kunststoffflaschen (20) zeitgesteuert eingeleitet wird.

10. Verfahren nach zumindest einem der vorhergehenden Ansprüche,
**dadurch gekennzeichnet, dass**
die Blasformen (21) während der Expansion der Kunststoffvorformlinge (10) entlang eines vorgegebenen Transportpfads (P) transportiert werden und die Reckgeschwindigkeit auch in Abhängigkeit von einer Position der Blasformen (21) entlang dieses Transportpfads (P) gewählt wird.

11. Vorrichtung (100) zum Umformen von Kunststoffvorformlingen (10) zu Kunststoffflaschen (20), umfassend zumindest zwei Blasstationen (2), wobei die Kunststoffvorformlinge (10) in Blasstationen (2) einbringbar sind, wobei jede Blasstation (2) mindestens eine Blasform (21) sowie eine Reckstange (22) zum Recken des Kunststoffvorformlings (10), entlang einer Längsachse des Kunststoffvorformlings (10) innerhalb der Blasform (21), umfasst, und durch Beaufschlagung mit einem gasförmigen Medium in der Blasform (21) die Kunststoffformlinge (10) zu den Kunststoffflaschen (20) expandierbar sind,
**dadurch gekennzeichnet, dass**
mittels zumindest einer Messeinrichtung (4), beispielsweise während des Blasvorgangs, eine Wanddicke des Kunststoffbehälters (20) messbar ist, und die Messeinrichtung (4) die Messwerte an eine Regelungs- und/oder Steuerungseinrichtung (3) ausgibt, wobei durch die Regelungs- und/oder Steuerungseinrichtung (3) zumindest eine Reckgeschwindigkeit der Reckstange (22) während des Blasvorgangs zur Einstellung einer Wanddicke der Kunststoffflaschen (20) zumindest zeitweise und/oder zumindest stellenweise individuell für jede Blasstation (2) variiert wird.

## Claims

1. Method for transforming plastic preforms (10) into plastic bottles (20), wherein the plastic preforms are introduced into blowing stations (2), wherein each blowing station comprises at least one blow mould (21) and a stretching rod (22) for stretching the plastic preform (10) along a longitudinal axis of the plastic preform (10) within the blow mould (21), and the plastic preforms (10) are expanded to form the plastic bottles (20) by being acted upon by a gaseous medium in the blow mould (21),
**characterized in that**
a wall thickness of the plastic container is measured by means of at least one measuring device (4), for example during the blowing operation, and the measuring device (4) outputs the measured values to a closed-loop and/or open-loop control device (3), wherein at least a stretching speed of the stretching rod (22) is varied by the closed-loop and/or open-loop control device (3) at least at times and/or at least in some locations during the blowing operation, individually for each blowing station (2), in order to adjust a wall thickness of the plastic bottles (20).

2. Method according to claim 1,
**characterized in that**
the stretching speed is the sole control variable by means of which the wall thickness of the plastic bottles is adjusted via the closed-loop and/or open-loop control device (3), in particular during the blowing operation.

3. Method according to claim 1 or 2,
wherein
the blowing operation comprises the following steps:
- pre-blowing by acting upon the plastic preforms (10) with a first pressure,
- intermediate blowing of the plastic preforms (10) with a second pressure which is higher than the first pressure,
- finish-blowing of the plastic preforms (10) with a third pressure which is higher than the first two pressures,
**characterized in that**
the stretching speed of the stretching rod (22) is varied at least during the pre-blowing and/or during the intermediate blowing and/or the stretching speed of the stretching rod (22) is varied at an instant (p0).

4. Method according to claim 3,
**characterized in that**
the stretching speed of the stretching rod (22) is slowed at the instant (p0).

5. Method according to at least one of claims 3 to 4,
**characterized in that**,
at least during the pre-blowing and/or during the intermediate blowing, the stretching speed is varied in such a way that the stretching speed is slowed or accelerated during the speed changeover time intervals.

6. Method according to at least one of the preceding claims,
**characterized in that**,
during the finish-blowing, the stretching rod (22) is at a standstill inside the blow mould (21) or at least is slowed in terms of its speed.

7. Method according to claim 5,
**characterized in that**,
during the speed changeover time intervals, the stretching speed changes linearly as a function of the blowing time.

8. Method according to at least one of the preceding claims,
**characterized in that**
each blowing station (2) comprises at least one drive unit (23), in particular a servo motor, which is controlled individually by the closed-loop and/or open-loop control device (3) in such a way that the stretching speed of the stretching rod (22) is varied.

9. Method according to at least one of the preceding claims,
**characterized in that**
the finish-blowing of the plastic bottles (20) is started in a time-controlled manner.

10. Method according to at least one of the preceding claims,
**characterized in that**
the blow moulds (21) are transported along a predefined transport path (P) during the expansion of the plastic preforms (10) and the stretching speed is also selected as a function of a position of the blow moulds (21) along this transport path (P).

11. Apparatus (100) for transforming plastic preforms (10) into plastic bottles (20), comprising at least two blowing stations (2), wherein the plastic preforms (10) can be introduced into blowing stations (2), wherein each blowing station (2) comprises at least one blow mould (21) and a stretching rod (22) for stretching the plastic preform (10) along a longitudinal axis of the plastic preform (10) within the blow mould (21), and the plastic preforms (10) can be expanded to form the plastic bottles (20) by being acted upon by a gaseous medium in the blow mould (21),
**characterized in that**
a wall thickness of the plastic container (20) can be measured by means of at least one measuring device (4), for example during the blowing operation, and the measuring device (4) outputs the measured values to a closed-loop and/or open-loop control device (3), wherein at least a stretching speed of the stretching rod (22) is varied by the closed-loop and/or open-loop control device (3) at least at times and/or at least in some locations during the blowing operation, individually for each blowing station (2), in order to adjust a wall thickness of the plastic bottles (20).

## Revendications

1. Procédé servant à mettre en forme des préformes en plastique (10) en des bouteilles en plastique (20), dans lequel les préformes en plastique sont introduites dans des postes de soufflage (2), dans lequel chaque poste de soufflage comprend au moins un moule de soufflage (21) ainsi qu'une tige d'étirage (22) servant à étirer la préforme en plastique (10) le long d'un axe longitudinal de la préforme en plastique (10) à l'intérieur du moule de soufflage (21) et les préformes en plastique (10) sont dilatées pour former les bouteilles en plastique (20) en les soumettant à l'action d'un milieu sous forme gazeuse dans le moule de soufflage (21),
**caractérisé en ce que**
une épaisseur de paroi du contenant en plastique est mesurée au moyen d'au moins un système de mesure (4), par exemple au cours de l'opération de soufflage, et le système de mesure (4) fournit les valeurs de mesure à un système de régulation et/ou de commande (3), dans lequel le système de régulation et/ou de commande (3) permet de faire varier, au moins par intermittence et/ou au moins par endroits individuellement pour chaque poste de soufflage (2), au moins une vitesse d'étirage de la tige d'étirage (22) au cours de l'opération de soufflage afin de régler une épaisseur de paroi des bouteilles en plastique (20).

2. Procédé selon la revendication 1,
**caractérisé en ce que**
la vitesse d'étirage est l'unique grandeur de régulation, au moyen de laquelle l'épaisseur de paroi des bouteilles en plastique est réglée en particulier au cours de l'opération de soufflage par l'intermédiaire du système de régulation et/ou de commande (3).

3. Procédé selon la revendication 1 ou 2,
dans lequel
l'opération de soufflage comprend les étapes qui suivent :
- le soufflage préalable en soumettant les préformes en plastique (10) à l'action d'une première pression
- le soufflage intermédiaire des préformes en plastique (10) à une deuxième pression, qui est plus élevée que la première pression
- le soufflage final des préformes en plastique (10) à une troisième pression, qui est plus élevée que les deux premières pressions, **caractérisé en ce que**
la vitesse d'étirage de la tige d'étirage (22) varie au moins au cours du soufflage préalable et/ou au cours du soufflage intermédiaire, et/ou la vitesse d'étirage de la tige d'étirage (22) varie à un moment donné (p0).

4. Procédé selon la revendication 3,
**caractérisé en ce que**
la vitesse d'étirage de la tige d'étirage (22) est ralentie au moment donné (p0).

5. Procédé selon au moins l'une quelconque des revendications 3 à 4, **caractérisé en ce que**
la vitesse d'étirage varie de telle manière au moins au cours du soufflage préalable et/ou au cours du soufflage intermédiaire que la vitesse d'étirage est ralentie ou accélérée au cours des intervalles de changement de vitesse.

6. Procédé selon au moins l'une quelconque des revendications précédentes,
**caractérisé en ce que**
la tige d'étirage (22) est à l'arrêt à l'intérieur du moule de soufflage (21) au cours du soufflage final, ou au moins sa vitesse est réduite.

7. Procédé selon la revendication 5,
**caractérisé en ce que**
la vitesse d'étirage est modifiée de manière linéaire en fonction du temps de soufflage au cours des intervalles de changement de vitesse.

8. Procédé selon au moins l'une quelconque des revendications précédentes,
**caractérisé en ce que**
chaque poste de soufflage (2) comprend au moins une unité d'entraînement (23), en particulier un servomoteur, qui est piloté individuellement par le système de régulation et/ou de commande (3) de telle manière que la vitesse d'étirage de la tige d'étirage (22) varie.

9. Procédé selon au moins l'une quelconque des revendications précédentes,
**caractérisé en ce que**
le soufflage final des bouteilles en plastique (20) est initié par une commande dans le temps.

10. Procédé selon au moins l'une quelconque des revendications précédentes,
**caractérisé en ce que**
les moules de soufflage (21) sont transportés au cours de la dilatation des préformes en plastique (10) le long d'un trajet de transport (P) spécifié, et la vitesse d'étirage est également choisie en fonction d'une position des moules de soufflage (21) le long dudit trajet de transport (P).

11. Dispositif (100) servant à mettre en forme des préformes en plastique (10) en des bouteilles en plastique (20), comprenant au moins deux postes de soufflage (2), dans lequel les préformes en plastique (10) peuvent être introduites dans des postes de soufflage (2), dans lequel chaque poste de soufflage (2) comprend au moins un moule de soufflage (21) ainsi qu'une tige d'étirage (22) servant à étirer la préforme en plastique (10) le long d'un axe longitudinal de la préforme en plastique (10) à l'intérieur du moule de soufflage (21), et les préformes en plastique (10) peuvent être dilatées pour former les bouteilles en plastique (20) en les soumettant à l'action d'un milieu sous forme gazeuse dans le moule de soufflage (21),
**caractérisé en ce que**
une épaisseur de paroi du contenant en plastique (20) peut être mesurée au moyen d'au moins un système de mesure (4), par exemple au cours de l'opération de soufflage, et le système de mesure (4) fournit les valeurs de mesure à un système de régulation et/ou de commande (3), dans lequel le système de régulation et/ou de commande (3) permet de faire varier, au moins par intermittence et/ou au moins par endroits, individuellement pour chaque poste de soufflage (2), au moins une vitesse d'étirage de la tige d'étirage (22) au cours de l'opération de soufflage afin de régler une épaisseur de paroi des bouteilles en plastique (20).
